(19) Europäisches Patentamt / European Patent Office / Office européen des brevets

(11) **EP 4 722 265 A1**

(12) **EUROPEAN PATENT APPLICATION**
published in accordance with Art. 153(4) EPC

(43) Date of publication:
08.04.2026 Bulletin 2026/15

(21) Application number: 24815819.8

(22) Date of filing: 27.05.2024

(51) International Patent Classification (IPC):
*C08F 279/04* (2006.01)  *C08F 2/38* (2006.01)
*C08L 25/12* (2006.01)  *C08L 55/02* (2006.01)

(52) Cooperative Patent Classification (CPC):
C08F 2/38; C08F 279/04; C08L 25/12; C08L 55/02

(86) International application number:
PCT/KR2024/007141

(87) International publication number:
WO 2024/248443 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 KR 20230069530

(71) Applicant: LG CHEM, LTD.
Seoul 07336 (KR)

(72) Inventors:
• JEON, Tae Young
Daejeon 34122 (KR)

• CHAI, Joo Byung
Daejeon 34122 (KR)
• JUNG, Yu Sung
Daejeon 34122 (KR)
• KIM, Jong Beom
Daejeon 34122 (KR)
• KIM, In Seok
Daejeon 34122 (KR)
• KIM, Yeong A
Daejeon 34122 (KR)

(74) Representative: Vossius & Partner
Patentanwälte Rechtsanwälte mbB
Siebertstrasse 3
81675 München (DE)

(54) **GRAFT COPOLYMER, PREPARATION METHOD THEREFOR, AND RESIN COMPOSITION COMPRISING SAME**

(57) The present invention relates to a conjugated diene-based graft copolymer having a controlled graft factor, and a method of manufacturing the same. In addition, the present invention relates to a thermoplastic resin composition that simultaneously secures excellent impact strength and scratch resistance without increasing the rubber content, due to containing a conjugated diene-based graft copolymer having a controlled graft factor.

【FIG. 2】

**Description**

## TECHNICAL FIELD

### Cross-reference to Related Applications

This application claims the benefit of Korean Patent Application No. 10-2023-0069530, filed on May 30, 2023, in the Korean Intellectual Property Office, the disclosure of which is incorporated in the present specification in its entirety by reference.

### Technical Field

The present invention relates to a graft copolymer, a method of producing the same, and a thermoplastic resin composition containing the same.

## BACKGROUND ART

A conjugated diene-based graft copolymer, which is prepared by subjecting monomers such as an aromatic vinyl-based monomer and a vinyl cyanide-based monomer to graft polymerization to a conjugated diene-based polymer, is widely used as an impact resistance reinforcing agent for a thermoplastic resin composition due to the excellent rubber characteristics of the conjugated diene-based polymer. In addition, a thermoplastic resin composition containing a conjugated diene-based graft copolymer has excellent impact resistance, chemical resistance, and processability and thus is widely used in an office machine, an electric/electronic component, a vehicle interior material, and the like.

In general, the thermoplastic resin composition contains, as described above, a conjugated diene-based graft copolymer as an impact resistance reinforcing agent and contains a styrene-acrylonitrile copolymer as a matrix resin; however, in a case where the content of the conjugated diene-based graft copolymer is increased in order to improve the impact strength of the thermoplastic resin composition, the tensile strength and the hardness decrease as compared with the impact strength improvement, and thus there is a limitation in that the scratch resistance of the thermoplastic resin composition itself deteriorates. As a result, there is a demand for the development of conjugated diene-based graft copolymers having improved impact resistance.

Documents of Related Art

Patent Document

**(Patent document 1)** JP4741202B2

## DISCLOSURE OF THE INVENTION

## TECHNICAL PROBLEM

The present invention is devised to solve the above-described limitation in the related art, and an object of the present invention is to provide a graft copolymer having improved impact resistance by adjusting the graft factor of a graft copolymer, and a method of producing the same.

In addition, another object of the present invention is to provide a thermoplastic resin composition which simultaneously secures excellent impact strength and scratch resistance without increasing the rubber content.

## TECHNICAL SOLUTION

(1) The present invention provides a method of producing a graft copolymer, comprising:

a step (S1) of batch-wise charging a conjugated diene-based polymer, an aromatic vinyl-based monomer, and a vinyl cyanide-based monomer into a reactor to initiate polymerization in an absence of a molecular weight control agent; and
a step (S2) of simultaneously and continuously charging the aromatic vinyl-based monomer, the vinyl cyanide-based monomer, the first molecular weight control agent, and a second molecular weight control agent different from the first molecular weight control agent into the reactor to carry out polymerization, after initiating the (S1) step,

wherein a weight of the first molecular weight control agent to be charged is equal to or larger than a weight of the second molecular weight control agent to be charged.

(2) The present invention provides the method of producing a graft copolymer according to (1),
wherein a ratio of the weight of the second molecular weight control agent to be charged to the weight of the first molecular weight control agent to be charged is 1:1 to 8.

(3) The present invention provides the method of producing a graft copolymer according to (1) or (2),
wherein the first molecular weight control agent is one or more selected from the group consisting of an α-methyl styrene dimer, a p-methyl styrene dimer, and a 2,4-dimethyl styrene dimer.

(4) The present invention provides the method of producing a graft copolymer according to any one of (1) to (3),
wherein the second molecular weight control agent is one or more selected from the group consisting of t-dodecyl mercaptan, n-dodecyl mercaptan, n-octyl mercaptan, carbon tetrachloride, methylene chloride, methylene bromide, tetraethyl thiuram disulfide, dipentamethylene thiuram disulfide, and diisopropyl xanthogen disulfide.

(5) The present invention provides the method of producing a graft copolymer according to any one of (1) to (4),
wherein the step S1 is carried out at a temperature of 40 °C to 55 °C.

(6) The present invention provides the method of producing a graft copolymer according to any one of (1) to (5),
wherein the step S2 is carried out at a temperature of 60 °C to 75 °C.

(7) The present invention provides the method of producing a graft copolymer according to any one of (1) to (6),
wherein the first molecular weight control agent is charged such that the amount thereof is 0.10 parts by weight to 0.55 parts by weight with respect to the sum of 100 parts by weight of the conjugated diene-based polymer, the aromatic vinyl-based monomer, and the vinyl cyanide-based monomer which are charged in the S1 step, and the aromatic vinyl-based monomer and the vinyl cyanide-based monomer, which are charged in the S2 step.

(8) The present invention provides the method of producing a graft copolymer according to any one of (1) to (7),
wherein the second molecular weight control agent is charged such that the amount thereof is 0.05 parts by weight to 0.4 parts by weight with respect to 100 parts by weight of the sum of the conjugated diene-based polymer, the aromatic vinyl-based monomer, and the vinyl cyanide-based monomer which are charged in the S1 step, and the aromatic vinyl-based monomer and the vinyl cyanide-based monomer, which are charged in the S2 step.

(9) The present invention provides a graft copolymer comprising:

a conjugated diene-based polymer; and
a plurality of polymer chains grafted onto the conjugated diene-based polymer,
wherein the polymer chain includes an aromatic vinyl-based monomer unit and a vinyl cyanide-based monomer unit, and the number of the polymer chains is 0.11 or less per 1 $nm^2$ of a surface area of the conjugated diene-based polymer.

(10) The present invention provides the graft copolymer according to (9),
wherein a graft rate is 0.2 to 0.45.

(11) The present invention provides the graft copolymer according to (9) or (10),
wherein the graft copolymer has a weight average molecular weight of 80,000 g/mol to 140,000 g/mol.

(12) The present invention provides the graft copolymer according to any one of (9) to (11),

wherein the graft copolymer contains the conjugated diene-based polymer and the plurality of polymer chains grafted onto the conjugated diene-based polymer,
the polymer chain contains an aromatic vinyl-based monomer unit and a vinyl cyanide-based monomer unit, and the graft copolymer has a graft density of 0.11 or less, where the graft density is defined by Mathematical Expression 1.

[Mathematical Expression 1]

$$\text{Graft density } (nm^{-2}) = g_d D \rho_p N_A / 6 M_g$$

In Mathematical Expression 1,

$g_d$ is a graft rate calculated according to Mathematical Expression 2,
D is an average particle diameter of the conjugated diene-based polymer,
$\rho_p$ is a particle density of the graft copolymer,

$N_A$ is Avogadro's number, and

$M_g$ is a weight average molecular weight of the plurality of polymer chains grafted, which is obtained by dissolving, in a TFT solution, a dry matter of a sol of the graft copolymer, the sol being separated from a supernatant according to a sol-gel separation method, and then subjecting the dry matter to measurement with GPC.

Graft rate = a weight (g) of the plurality of polymer chains grafted/a weight (g) of the conjugated diene-based polymer
                                                                [Mathematical Expression 2]

(13) The present invention provides a thermoplastic resin composition comprising:

the graft copolymer according to any one of (8) to (12): and
a non-graft copolymer containing an aromatic vinyl-based monomer unit and a vinyl cyanide-based monomer unit.

## ADVANTAGEOUS EFFECTS

According to the present invention, a graft copolymer having improved impact resistance and a method of producing the same may be provided.

In addition, according to the present invention, a thermoplastic resin composition which simultaneously secures excellent impact strength and scratch resistance without increasing the rubber content may be provided.

## BRIEF DESCRIPTION OF THE DRAWINGS

FIG. 1 is a TEM image of a graft copolymer according to Comparative Example 3 of the present invention.
FIG. 2 is a TEM image of a graft copolymer according to Example 1 of the present invention.

## MODE FOR CARRYING OUT THE INVENTION

Hereinafter, the present invention will be described in more detail to facilitate understanding of the present invention.

The terms and words, which are used in the present specification and claims, are not to be restrictively construed in their ordinary or dictionary sense and are to be construed in the sense and with the concepts consistent with the technical ideas of the present invention based on the principle that an inventor may properly define concepts of terms to describe the present invention of the inventor in the best way.

The terms used in the present specification are used only to describe Examples, and thus it is not intended to limit the present invention. A singular expression includes a plural expression unless it is definitely different contextually.

In the present invention, the term "monomer unit" may indicate a component, structure, or material itself derived from a monomer, and as a specific example, it may mean a repeating unit that is formed by a charged monomer's participating in a polymerization reaction during polymerization of a polymer.

In the present invention, the "weight average molecular weight" is measured by gel permeation chromatography (GPC). For example, a specimen to be measured is dissolved in a tetrahydrofuran (THF) solution, and then measurement can be carried out in terms of a relative value with respect to a standard specimen (standard polystyrene, PS) through gel permeation chromatography (GPC).

The term "composition" used in the present invention includes a mixture of materials, which contains a reaction product and a decomposition product which are formed from materials of the composition, as well as the composition.

In the present invention, the "average particle diameter" may mean an arithmetic average particle diameter in a particle size distribution that is measured by dynamic light scattering, and more specifically, an average particle diameter in terms of scattering intensity. The average particle diameter of conjugated diene-based polymers can be measured using a device of Nicomp 380 (product name, manufacturer: PSS Nicomp).

<Method of producing graft copolymer>

A method of producing a graft copolymer according to according to an embodiment of the present invention includes a step (S1) of batch-wise charging a conjugated diene-based polymer, an aromatic vinyl-based monomer, and a vinyl cyanide-based monomer into a reactor to initiate polymerization in an absence of a molecular weight control agent and a step (S1) of simultaneously and continuously charging the aromatic vinyl-based monomer, the vinyl cyanide-based monomer, the first molecular weight control agent, and a second molecular weight control agent different from the first molecular weight control agent into the reactor to carry out polymerization, after initiating the (S1) step, where a charging weight of the first molecular weight control agent is equal to or larger than a charging amount of the second molecular weight control agent.

The inventors of the present invention found that in a case where polymerization is carried out in the absence of a molecular weight control agent and the weight ratio of the first molecular weight control agent to the second molecular weight control agent is adjusted to a specific ratio in the step of carrying out polymerization, the graft rate is effectively reduced, the molecular weight is maintained, the graft density (the number of high-molecular-weight polymers per particle surface area) is 0.1 or less, and thus a graft copolymer having a significantly improved impact strength is produced, whereby the present invention has been completed.

Hereafter, the method of producing a graft copolymer according to an embodiment of the present invention is described.

1. First polymerization step (S1 step)

First, according to an embodiment of the present invention, the method of producing a graft copolymer includes a first polymerization step. The first polymerization step is such that a conjugated diene-based polymer, an aromatic vinyl-based monomer, and a vinyl cyanide-based monomer are charged batch-wise into a reactor to initiate polymerization in the absence of the molecular weight control agent (chain transfer agent, CTA).

According to an embodiment of the present invention, the conjugated diene-based polymer may be produced by polymerizing a conjugated diene-based monomer and thus contain a conjugated diene-based monomer unit. As a more specific example, the conjugated diene-based polymer may be produced by subjecting a conjugated diene-based monomer to emulsion polymerization. In this case, the average particle diameter of the conjugated diene-based polymer can be easily adjusted, and thus a conjugated diene-based polymer suitable for the desired mechanical physical properties can be used. The conjugated diene-based polymer may mean synthetic rubber produced by subjecting a diene-based monomer, or a diene-based monomer and an aromatic vinyl-based monomer to crosslinking polymerization.

According to an embodiment of the present invention, the conjugated diene-based monomer for forming the conjugated diene-based monomer unit of the conjugated diene-based polymer may be one or more selected from the group consisting of 1,3-butadiene, 2,3-dimethyl-1,3-butadiene, piperylene, 3-butyl-1,3-octadiene, isoprene, and 2-phenyl-1,3-butadiene, and it may be 1,3-butadiene as a more specific example.

The average particle diameter of the conjugated diene-based polymer may be 50 to 500 nm and desirably 70 to 400 nm.

According to an embodiment of the present invention, the aromatic vinyl-based monomer may be one or more selected from the group consisting of styrene, $\alpha$-methyl styrene, 3-methyl styrene, 4-methyl styrene, 4-propyl styrene, 1-vinyl naphthalene, 4-cyclohexyl styrene, 4-(p-methylphenyl)styrene, and 1-vinyl-5-hexyl naphthalene, and it may be styrene as a specific example.

According to an embodiment of the present invention, the vinyl cyanide-based monomer may be one or more selected from the group consisting of acrylonitrile, methacrylonitrile, ethacrylonitrile, phenyl acrylonitrile, and $\alpha$-chloroacrylonitrile, and it may be acrylonitrile as a specific example.

According to an embodiment of the present invention, the first polymerization step is carried out in the absence of a molecular weight control agent that is charged in the following polymerization execution step. In a case where polymerization is initiated in the presence of a molecular weight control agent, the average molecular weight and the graft rate of the polymer change, which causes a problem in that it is difficult to control the graft density.

According to an embodiment of the present invention, the first polymerization step may be carried out at a temperature of 40 °C to 55 °C. In a case where the above-described range is satisfied, it is possible to obtain a graft copolymer having excellent polymerization stability and an excellent conversion rate.

According to an embodiment of the present invention, the first polymerization step may be carried out in the presence of one or more selected from the group consisting of an initiator, an activator, an emulsifier, and an aqueous solvent.

According to an embodiment of the present invention, as a radical initiator, the initiator may be, as a radical initiator, one or more selected from the group consisting of sodium persulfate, potassium persulfate, ammonium persulfate, hydroperoxide, t-butyl peroxide, t-butyl hydroperoxide, cumene hydroperoxide, p-menthane hydroperoxide, di-t-butyl peroxide, t-butyl cumyl peroxide, acetyl peroxide, isobutyl peroxide, octanoyl peroxide, dibenzoyl peroxide, 3,5,5-trimethyl hexanol peroxide, t-butyl peroxyisobutyrate, azobis isobutyronitrile, azobis-2,4-dimethylvaleronitrile, azobis cyclohexanecarbonitrile, and azobis methyl isobutyrate, and it may be hydroperoxide as a specific example.

According to an embodiment of the present invention, the initiator that is charged in the first polymerization step may be present such that the amount thereof is 0.001 to 1.000 parts by weight, and desirably 0.010 to 0.800 parts by weight with respect to 100 parts by weight of the total sum of the conjugated diene-based polymer, the vinyl cyanide-based monomer, and the aromatic vinyl-based monomer which are charged during the production of the graft copolymer (that is, charged in the first polymerization step and a second polymerization step described later). In a case where the above-described range is satisfied, it is possible to minimize the remaining amount of the initiator in the graft copolymer powder while improving the polymerization stability of the graft polymerization.

According to an embodiment of the present invention, an activator may be further charged together with the initiator in order to promote the reaction in the first polymerization step. The activator may be one or more selected from the group consisting of sodium formaldehyde sulfoxylate, sodium ethylenediamine tetraacetate, ferrous sulfate, dextrose, sodium pyrophosphate, tetrasodium pyrophosphate, sodium pyrophosphate, and sodium sulfate

According to an embodiment of the present invention, the activator that is charged in the first polymerization step may be charged such that the amount thereof is 0.001 to 0.500 parts by weight, and desirably 0.010 to 0.300 parts by weight with respect to 100 parts by weight of the total sum of the conjugated diene-based polymer, the vinyl cyanide-based monomer, and the aromatic vinyl-based monomer which are charged during the production of the graft copolymer (that is, charged in the first polymerization step and a second polymerization step described later). In a case where the above-described range is satisfied, it is possible to minimize the remaining amount of the activator in the graft copolymer powder while improving the polymerization stability of the graft polymerization.

According to an embodiment of the present invention, the emulsifier may be one or more selected from the group consisting of sodium dicyclohexyl sulfosuccinate, sodium dodecyl sulfate, sodium dodecyl benzene sulfonate, sodium octadecyl sulfate, sodium oleic sulfate, potassium dodecyl sulfate, potassium octadecyl sulfate, a fatty acid potassium salt, and a fatty acid sodium salt.

According to an embodiment of the present invention, the emulsifier that is charged in the first polymerization step may be charged such that the amount thereof is 0.05 to 1.00 parts by weight, and desirably 0.10 to 0.300 parts by weight with respect to 100 parts by weight of the total sum of the conjugated diene-based polymer, the vinyl cyanide-based monomer, and the aromatic vinyl-based monomer which are charged during the production of the graft copolymer (that is, charged in the first polymerization step and a second polymerization step described later). In a case where the above-described range is satisfied, it is possible to produce a graft copolymer powder having a desired average particle diameter while improving the polymerization stability of the graft polymerization.

According to an embodiment of the present invention, the aqueous solvent may be ion exchange water or pure water.

2. Second polymerization step (S2 step)

According to an embodiment of the present invention, the method of producing a graft copolymer includes a second polymerization step. The second polymerization step is carried out following the first polymerization step, where the first molecular weight control agent, the second molecular weight control agent, the aromatic vinyl-based monomer, and the vinyl cyanide-based monomer are continuously charged into the reactor to carry out polymerization.

According to an embodiment of the present invention, the first molecular weight control agent may be, as an alkyl styrene-based dimer, one or more selected from the group consisting of an $\alpha$-methyl styrene dimer, a p-methyl styrene dimer, and a 2,4-dimethyl styrene dimer, and it may be an $\alpha$-methyl styrene dimer as a specific example.

According to an embodiment of the present invention, the first molecular weight control agent may be charged such that the amount thereof is 0.10 to 0.55 parts by weight with respect to 100 parts by weight of the total sum of the conjugated diene-based polymer, the vinyl cyanide-based monomer, and the aromatic vinyl-based monomer which are charged during the production of the graft copolymer (that is, charged in the first polymerization step and a second polymerization step described later). Specifically, the first molecular weight control agent may be charged such that the amount thereof is 0.11 parts by weight or more, 0.12 parts by weight or more, 0.13 parts by weight or more, 0.14 parts by weight or more, or 0.15 parts by weight or more, and may be charged such that the amount thereof is 0.54 parts by weight or less, 0.53 parts by weight or less, 0.52 parts by weight or less, 0.51 parts by weight or less, or 0.50 parts by weight or less with respect to 100 parts by weight of the total sum of the conjugated diene-based polymer, the vinyl cyanide-based monomer, and the aromatic vinyl-based monomer, which are charged during the production of the graft copolymer. In a case where the above-described range is satisfied, the graft rate of the graft copolymer to be produced is reduced, and the weight average molecular weight is maintained, and thus the graft density is 0.1 or less, which makes it possible to improve impact strength.

According to an embodiment of the present invention, the second molecular weight control agent may be one or more selected from the group consisting of t-dodecyl mercaptan, n-dodecyl mercaptan, and n-octyl mercaptan, as a mercaptan compound, as well as carbon tetrachloride, methylene chloride, methylene bromide, tetraethyl thiuram disulfide, dipentamethylene thiuram disulfide, and diisopropyl xanthogen disulfide, and it may be t-dodecyl mercaptan as a specific example.

According to an embodiment of the present invention, the second molecular weight control agent may be charged such that the amount thereof is 0.05 to 0.4 parts by weight or with respect to 100 parts by weight of the total sum of the conjugated diene-based polymer, the vinyl cyanide-based monomer, and the aromatic vinyl-based monomer which are charged during the production of the graft copolymer (that is, charged in the first polymerization step and a second polymerization step described later). Specifically, the second molecular weight control agent may be charged such that the amount thereof is 0.06 parts by weight or more, 0.07 parts by weight or more, 0.08 parts by weight or more, 0.09 parts by weight or more, or 0.10 parts by weight or more, and in addition, may be charged such that the amount thereof is 0.38 parts by weight or less, 0.36 parts by weight or less, 0.34 parts by weight or less, 0.32 parts by weight or less, or 0.30 parts by weight or less with respect to 100 parts by weight of the total sum of the conjugated diene-based polymer, the vinyl cyanide-based monomer, and the aromatic vinyl-based monomer, which are charged during the production of the graft copolymer. In a case where the above-described range is satisfied, the graft rate of the graft copolymer to be produced is reduced, and the weight average molecular weight is maintained, and thus the graft density is 0.1 or less, which makes it possible to improve impact strength.

According to an embodiment of the present invention, the first molecular weight control agent and the second molecular weight control agent may be charged such that the amount thereof is 0.15 to 0.95 parts by weight with respect to 100 parts by weight of the total sum of the conjugated diene-based polymer, the vinyl cyanide-based monomer, and the aromatic vinyl-based monomer which are charged during the production of the graft copolymer (that is, charged in the first polymerization step and a second polymerization step described later). Specifically, the first molecular weight control agent may be charged such that the amount thereof is 0.2 parts by weight or more, 0.25 parts by weight or more, 0.3 parts by weight or more, 0.35 parts by weight or more, 0.4 parts by weight or more, 0.45 parts by weight or more, or 0.5 parts by weight or more, and may be charged such that the amount thereof is 0.9 parts by weight or less, 0.85 parts by weight or less, 0.8 parts by weight or less, 0.75 parts by weight or less, 0.7 parts by weight or less, 0.65 parts by weight or less, or 0.6 parts by weight or less with respect to 100 parts by weight of the total sum of the conjugated diene-based polymer, the vinyl cyanide-based monomer, and the aromatic vinyl-based monomer, which are charged during the production of the graft copolymer. In a case where the above-described range is satisfied, the graft rate of the graft copolymer to be produced is reduced, and the weight average molecular weight is maintained, and thus the graft density is 0.1 or less, which makes it possible to improve impact strength.

According to an embodiment of the present invention, the alkyl styrene-based dimer is more advantageous than a mercaptan-based compound in controlling the graft rate of the graft copolymer, and thus, a weight of the first molecular weight control agent to be charged may be equal to or larger than a weight of the second molecular weight control agent to be charged.

A weight ratio of the weight of the second molecular weight control agent to be charged to the weight of the first molecular weight control agent to be charged (charging amount of second molecular weight control agent: charging amount of first molecular weight control agent) may be 1:1 to 8. As a specific example, the weight ratio of the weight of the second molecular weight control agent to be charged to the weight of the first molecular weight control agent to be charged may be 1:1 to 7, 1:1 to 6, 1:1 to 5, 1:1 to 4, or 1:1 to 3. In a case where the above-described range is satisfied, the graft rate of the graft copolymer to be produced is reduced, and the weight average molecular weight is maintained, and thus the graft density is 0.1 or less, which makes it possible to improve impact strength.

According to an embodiment of the present invention, the first molecular weight control agent and the second molecular weight control agent may be continuously charged simultaneously in the second polymerization step. In a case of continuously charging the first molecular weight control agent and the second molecular weight control agent, it is easy to control the graft rate and the weight average molecular weight as compared with the batch-wise discharge, and thus it is possible to produce a graft copolymer having a desired graft rate and a desired weight average molecular weight.

According to an embodiment of the present invention, the time at which the continuous charge of the first molecular weight control agent and the second molecular weight control agent is initiated may be the time at which the polymerization conversion rate is 10% or less, and desirably at the time at which the polymerization conversion rate is 0% to 5%. In a case where the above-described conditions are satisfied, the first molecular weight control agent and the second molecular weight control agent are charged from the polymerization propagation step, and thus it is possible to maximize the effects due to the first molecular weight control agent and the second molecular weight control agent.

According to an embodiment of the present invention, the time at which the continuous charge of the first molecular weight control agent and the second molecular weight control agent is terminated may be the time at which the polymerization conversion rate is 80% to 97%, and desirably at the time at which the polymerization conversion rate is 90% to 95%. In a case where the above-described conditions are satisfied, it is possible to improve the polymerization stability and increase the polymerization conversion rate.

According to an embodiment of the present invention, the weight ratio of the aromatic vinyl-based monomer charged in the first polymerization step to the aromatic vinyl-based monomer charged in the second polymerization step may be 1:1.857 to 9 and desirably 1:2.333 to 5.667. In a case where the above-described conditions are satisfied, polymerization stability is improved, which makes it possible to produce a graft copolymer having a uniform composition throughout polymerization.

According to an embodiment of the present invention, the weight ratio of the vinyl cyanide-based monomer charged in the first polymerization step to the vinyl cyanide-based monomer charged in the second polymerization step may be 1:1.857 to 9 and desirably 1:2.3333 to 5.667. In a case where the above-described conditions are satisfied, polymerization stability is improved, which makes it possible to produce a graft copolymer having a uniform composition throughout polymerization.

According to an embodiment of the present invention, the second polymerization step may be carried out at a temperature of 60 °C to 75 °C. In a case where the above-described range is satisfied, polymerization stability is excellent during the polymerization of the graft copolymer, and it is possible to produce a graft copolymer having an excellent conversion rate.

According to an embodiment of the present invention, the second polymerization step may be carried out in the presence of one or more selected from the group consisting of an emulsifier, an initiator, an activator, and an aqueous solvent. The description for the emulsifier, the initiator, the activator, and the aqueous solvent is described above.

3. Drying step

According to an embodiment of the present invention, the method of producing a graft copolymer may further include a process of subjecting the graft copolymer latex, which has been produced through the first polymerization step and the second polymerization step, to dehydration and hot-air drying, thereby producing a graft copolymer powder (dry powder, DP) having less than 1% of moisture.

<Graft copolymer>

The graft copolymer according to an embodiment of the present invention is such one that is produced by the method of producing a graft copolymer according to the present invention, and it may be such one that is obtained by subjecting an aromatic vinyl-based monomer unit and a vinyl cyanide-based monomer unit to graft polymerization to a conjugated diene-based polymer. Therefore, the graft copolymer may be such one that contains the conjugated diene-based polymer, as well as an aromatic vinyl-based monomer unit grafted onto the conjugated diene-based polymer and a vinyl cyanide-based monomer unit. In the present specification, the aromatic vinyl-based monomer unit and the vinyl cyanide-based monomer unit which are grafted onto the conjugated diene-based polymer may be described as a polymer chain.

The graft copolymer according to an embodiment of the present invention may be such one that is a graft copolymer containing a conjugated diene-based polymer; and a plurality of polymer chains grafted onto the conjugated diene-based polymer, where the polymer chain includes an aromatic vinyl-based monomer unit and a vinyl cyanide-based monomer unit, and the number of the polymer chains is 0.06 to 0.11 per 1 $nm^2$ of a surface area of the conjugated diene-based polymer. Specifically, the number of the polymer chains per 1 $nm^2$ of the surface area of the conjugated diene-based polymer may be 0.065 or more, 0.07 or more, 0.075 or more, or 0.08 or more, and in addition, it may be 0.108 or less, 0.106 or less, 0.104 or less, 0.102 or less, or 0.1 or less. In a case where the above-described range is satisfied, the dispersibility of the graft copolymer particles in the non-graft resin is improved, and thus the impact strength of the graft copolymer itself can be improved.

According to an embodiment of the present invention, the number of the polymer chains per 1 $nm^2$ of the surface area of the conjugated diene-based polymer can be expressed by the graft density, and the graft density can be defined according to Mathematical Expression 1.

$$[\text{Mathematical Expression 1}]$$

$$\text{Graft density } (nm^{-2}) = g_d D \rho_p N_A / 6 M_g$$

In Mathematical Expression 1,

$g_d$ is a graft rate calculated according to Mathematical Expression 2,
D is an average particle diameter (nm) of the conjugated diene-based polymer contained in the graft copolymer,
$\rho_p$ is a particle density of the graft copolymer,
$N_A$ is Avogadro's number, and
$M_g$ is a weight average molecular weight of the grafted monomer, that is, the plurality of polymer chains grafted, which is obtained by dissolving, in a TFT solution, a dry matter of a sol of the graft copolymer, the sol being separated from a supernatant according to a sol-gel separation method, and then subjecting the dry matter to measurement with GPC.

[Mathematical Expression 2]

```
Graft rate = A weight (g) of the grafted monomer, that
```

is, the plurality of polymer chains grafted/a weight (g) of the conjugated diene-based polymer

According to an embodiment of the present invention, the particle density ($\rho_p$) of the graft copolymer may be measured by the ASTM D792 method, and the particles of the graft copolymer may mean a graft copolymer in a powdery state.

According to an embodiment of the present invention, the particle density ($\rho_p$) of the graft copolymer may be 0.95 g/cm$^3$ to 0.99 g/cm$^3$.

According to an embodiment of the present invention, the number of the polymer chains per 1 nm$^2$ of the surface area of the conjugated diene-based polymer, that is, the graft density may be 0.06 to 0.11. Specifically, the graft density of the conjugated diene-based polymer may be 0.065 or more, 0.07 or more, 0.075 or more, or 0.08 or more, and in addition, it may be 0.108 or less, 0.106 or less, 0.104 or less, 0.102 or less, or 0.1 or less. In a case where the above-described range is satisfied, the dispersibility of the graft copolymer particles in the non-graft resin is improved, and thus the impact strength of the graft copolymer itself can be improved.

<Thermoplastic resin composition>

A thermoplastic resin composition according to according to an embodiment of the present invention may include the graft copolymer according to the present invention.

According to an embodiment of the present invention, the thermoplastic resin composition may further contain a non-graft copolymer containing an aromatic vinyl-based monomer unit and a vinyl cyanide-based monomer unit in order to improve processability.

Thermoplastic resin composition may contain the graft copolymer such that the amount of the graft copolymer is 10 parts by weight to 21 parts by weight with respect to 100 parts by weight of the sum of the graft copolymer and the non-graft copolymer. Specifically, the thermoplastic resin composition may contain the graft copolymer such that the amount of the graft copolymer is 11 parts by weight or more, 12 parts by weight or more, 13 parts by weight or more, 14 parts by weight, or 15 parts by weight or more, and in addition, may contain the graft copolymer such that the amount of the graft copolymer is 20.8 parts by weight or less, 20.6 parts by weight or less, 20.4 parts by weight or less, 20.2 parts by weight or less, or 20 parts by weight or less with respect to 100 parts by weight of the sum of the graft copolymer and the non-graft copolymer. In a case where the above-described range is satisfied, excellent impact strength, excellent tensile strength, and excellent scratch resistance can be secured at the same time.

Hereinafter, examples of the present invention will be described in detail so that a person skilled in the art can easily carry out the examples of the present invention. However, the present invention may be embodied in various forms different from each other and thus is not limited to the examples described herein.

Example 1

<Production of graft copolymer>

(First polymerization step) A mixed solution, which contained 100 parts by weight of ion exchange water, 58 parts by weight of a conjugated diene-based polymer (average particle diameter: 320 nm), 7.5 parts by weight of styrene and 2.5 parts by weight of acrylonitrile as monomers, 0.1 parts by weight of a fatty acid potassium salt as an emulsifier, 0.05 parts by weight of hydroperoxide as an initiator, and 0.08 parts by weight of dextrose, 0.05 parts by weight of sodium pyrophosphate, and 0.001 parts by weight of ferrous sulfate as activators with respect to 100 parts by weight of the total sum of the conjugated diene-based polymer, the styrene, and the acrylonitrile, which are charged in the whole production process, was charged batch-wise into a polymerization reactor filled with nitrogen, and the reaction was initiated at 50 °C.

(Second polymerization step) At the beginning of the first polymerization step, 24 parts by weight of styrene and 8 parts by weight of acrylonitrile as monomers, 0.2 parts by weight of a fatty acid potassium salt as an emulsifier, a total sum of 0.6 parts by weight or less of t-dodecylmercaptan (a second molecular weight control agent) and an alpha-methyl styrene dimer (a first molecular weight control agent) as molecular weight control agents (charging amount of t-dodecylmercaptan: charging amount of alpha-methyl styrene dimer is 1:3), and 0.1 parts by weight of hydroperoxide as an initiator were continuously charged in an emulsified state (as emulsified monomers) while raising the temperature to 70 °C for about 2 hours.

Thereafter, at the time of termination of the second polymerization step, 0.04 parts by weight of dextrose, 0.03 parts by weight of sodium pyrophosphate, and 0.0005 parts by weight of ferrous sulfate were charged batch-wise, and then the reaction was terminated after the temperature was raised to 80 °C over a period of time of 1 hour.

(Drying step) 0.4 parts by weight of an antioxidant (A/O) was added to the latex that had completely undergone the reaction, thereby obtaining a graft copolymer powder (dry powder, DP) having moisture of less than 1% and a density of 0.99 g/cm³ measured by the ASTM D792 method, by aggregation with 2 parts by weight of sulfuric acid and then a dehydration process, which was followed by drying with a hot-air fluidized bed dryer.

<Production of thermoplastic resin composition>

20 parts by weight of the obtained graft copolymer powder and 80 parts by weight of styrene-acrylonitrile (SAN) pellet were put in a mixer, mixed, pelletized using an extruder, and then injected using an injection molding machine to obtain a thermoplastic resin composition.

Example 2

The same method as in Example 1 was carried out to obtain a thermoplastic resin composition, except that in the second polymerization step of Example 1, the charging was such that the ratio of the charging amount of t-dodecylmercaptan to the charging amount of the alpha-methyl styrene dimer was 1:1.5.

Example 3

The same method as in Example 1 was carried out to obtain a thermoplastic resin composition, except that in the second polymerization step of Example 1, the charging was such that the ratio of the charging amount of t-dodecylmercaptan to the charging amount of the alpha-methyl styrene dimer was 1:5.

Example 4

The same method as in Example 1 was carried out to obtain a thermoplastic resin composition, except that in the second polymerization step of Example 1, the ratio of the charging amount of t-dodecylmercaptan to the charging amount of the alpha-methyl styrene dimer was 2:3.

Example 5

The same method as in Example 1 was carried out to obtain a thermoplastic resin composition, except that in the second polymerization step of Example 1, the charging was such that the ratio of the charging amount of t-dodecylmercaptan to the charging amount of the alpha-methyl styrene dimer was 1:1.

Comparative Example 1

The same method as in Example 1 was carried out to obtain a thermoplastic resin composition, except that in the second polymerization step of Example 1, the alpha-methyl styrene dimer was not charged.

Comparative Example 2

The same method as in Example 1 was carried out to obtain a thermoplastic resin composition, except that in the second polymerization step of Example 1, the charging amount of t-dodecylmercaptan was doubled and the alpha-methyl styrene dimer was not charged.

Comparative Example 3

The same method as in Example 1 was carried out to obtain a thermoplastic resin composition, except that in the second polymerization step of Example 1, the charging amount of t-dodecylmercaptan was quadrupled and the alpha-methyl styrene dimer was not charged.

Comparative Example 4

The same method as in Example 1 was carried out to obtain a graft copolymer powder, except that in the second polymerization step of Example 1, the charging amount of t-dodecylmercaptan was increased by 5 times and the alpha-methyl styrene dimer was not charged.

Comparative Example 5

The same method as in Example 1 was carried out to obtain a graft copolymer powder, except that in the second polymerization step of Example 1, the charging amount of t-dodecylmercaptan was quadrupled and the alpha-methyl styrene dimer was not charged.

22 parts by weight of the obtained graft copolymer powder and 78 parts by weight of styrene-acrylonitrile (SAN) pellet were put in a mixer, mixed, pelletized using an extruder, and then injected using an injection molding machine to obtain a thermoplastic resin composition.

Comparative Example 6

The same method as in Example 1 was carried out to obtain a thermoplastic resin composition, except that in the first polymerization step of Example 1, 0.1 parts by weight of the alpha-methyl styrene dimer was additionally charged as a molecular weight control agent.

Comparative Example 7

The same method as in Example 1 was carried out to obtain a thermoplastic resin composition, except that in the second polymerization step of Example 1, the charging amount of t-dodecylmercaptan was quadrupled.

Comparative Example 8

The same method as in Example 1 was carried out to obtain a thermoplastic resin composition, except that in the second polymerization step of Example 1, the charging amount of t-dodecylmercaptan was increased by 5 times.

Experimental Example 1

The physical properties of the graft copolymer latex or powder obtained in each of Examples 1 to 5 and Comparative Examples 1 to 8 were measured by the method described below, and the results are shown in Tables 1 to 3 below.

* Graft density: The calculation was carried out in accordance with Mathematical Expression 1 below.

$$[\text{Mathematical Expression 1}]$$

$$\text{Graft density} = g_d D \rho_p N_A / 6 M_g$$

In Mathematical Expression 1,

$g_d$ is a graft rate calculated according to Mathematical Expression 2,
D is an average particle diameter of the conjugated diene-based polymer contained in the graft copolymer,
$\rho_p$ is the particle density of the graft copolymer (that is, the density of the graft copolymer powder),
$N_A$ is Avogadro's number, and
$M_g$ is a weight average molecular weight of the grafted monomer (that is, the plurality of polymer chains grafted), which is obtained by dissolving, in a TFT solution, a dry matter of a sol of the graft copolymer, the sol being separated from a supernatant according to a sol-gel separation method, and then subjecting the dry matter to measurement with GPC.

* Graft rate: After putting 1 g of the graft copolymer powder in 50 ml of acetone and stirring for 24 hours, the resultant solution was subjected to sol-gel separation using a centrifuge, the separated acetone solution was dropped in methanol to obtain an ungrafted monomer fraction, this ungrafted monomer fraction was dried at 60 °C to 120°C to measure the weight. Then, the sum of the weight of the charged rubbery polymer and the weight of the ungrafted monomer was subtracted from the total weight of the rubbery polymer, the styrene, and the acrylonitrile, which were charged in the production of the graft copolymer, and then the weight of the grafted monomer was calculated to carry out calculation in accordance with Mathematical Expression 2.

[Mathematical Expression 2]

Graft rate = Weight (g) of grafted monomer

(that is, plurality of polymer chains grafted)/weight (g) of conjugated diene-based polymer

* Polymerization conversion rate: After drying 1 g of polymer latex in a 150 °C hot air dryer for 15 minutes, the weight was measured to determine the total solid content (TSC), and the calculation was carried out in accordance with Mathematical Expression 3 below.

Polymerization conversion rate (%) = Total solid content (TSC) $\times$ (parts by weight of monomer and subsidiary material charged) /100 - (parts by weight of subsidiary material charged other than monomer)          [Mathematical Expression 3]

* Weight average molecular weight (g/mol): A dry matter obtained by drying the supernatant described in the graft rate measuring method was dissolved in a tetrahydrofuran (THF) solution and subsequently filtered through a 1 $\mu$m filter, and measurement was carried out in terms of a relative value with respect to a standard polystyrene (standard PS) specimen through gel permeation chromatography.

Experimental Example 2

The thermoplastic resin composition obtained in each of Examples 1 to 5 and Comparative Examples 1 to 8 was extruded and injected to prepare a test piece, the physical properties of the test piece were measured by the method described below, and the results are shown in Tables 1 to 3 below.
* Izod impact strength (kg·cm/cm, 1/4"): Measurement was carried out in accordance with ASTM D265.

* Melt index (MI, g/10 min): Measurement was carried out under conditions of 220 °C and 10 kg in accordance with ASTM D1238.

* Tensile strength (TS, kg/cm$^2$): In accordance with ASTM D638, a test piece having a thickness of 3.2 mm was pulled using U.T.M (manufacturer; Instron, model name: 4466) at a crosshead speed (crosshead speed) of 5 mm/min, and then the point where cutting occurred in the test piece was measured.

* Pencil hardness: Using a pencil hardness measuring device manufactured by Jungdo testing instrument, the pencil core was set to be in contact with a coating surface at 45° and pressed with a load of 750 g so that a distance of at least 7 mm was horizontally pressed at a speed of 0.5 to 1 mm/s, and then it was observed whether the pencil core has a scar, and the most strong hardness at which the pencil does not have a scar was defined as the pencil hardness. (9H > 8H > 7H > 6H > 5H > 4H > 3H > 2H > F > HB > B > 2B > 3B > 4B > 5B > 6B > 7B > 8B > 9B)

[Table 1]

| | | Example | | | | |
|---|---|---|---|---|---|---|
| | | 1 | 2 | 3 | 4 | 5 |
| (S1) step | AMSD charging amount (parts by weight) | - | - | - | - | - |
| (S2) step | TDDM charging amount : AMSD charging amount | 1:3 | 1:1.5 | 1:5 | 2:3 | 1:1 |
| Graft copolym er | Conversion rate (%) | 98.1 | 98.2 | 93.5 | 97.7 | 97.1 |
| | Graft rate | 0.37 | 0.41 | 0.3 | 0.31 | 0.26 |
| | Molecular weight (g/mol) | 120,000 | 130,000 | 110,000 | 100,000 | 87,000 |
| | Graft density (nm$^{-2}$) | 0.097 | 0.100 | 0.087 | 0.099 | 0.095 |

(continued)

| | | Example | | | | |
|---|---|---|---|---|---|---|
| | | 1 | 2 | 3 | 4 | 5 |
| Thermop lastic re- sin com- posi tion | Graft copolymer (parts by weight) | 20 | 20 | 20 | 20 | 20 |
| | Non-graft parts by weight) | 80 | 80 | 80 | 80 | 80 |
| | IMP (1/4) | 19 | 18 | 19 | 18 | 17 |
| | MI (g/10min) | 43 | 41 | 44 | 45 | 46 |
| | TS | 480 | 483 | 485 | 477 | 479 |
| | Pencil hardness | B | B | B | B | B |

[Table 2]

| | | Comparative Example | | | | |
|---|---|---|---|---|---|---|
| | | 1 | 2 | 3 | 4 | 5 |
| (S1) step | AMSD charging amount (parts by weight) | - | - | - | - | - |
| (S2) step | TDDM charging amount : AMSD charging amount | 1:0 | 2:0 | 4:0 | 5:0 | 4:0 |
| Graft copolym er | Conversion rate (%) | 98.3 | 98.0 | 97.5 | 96.4 | 97.5 |
| | Graft rate | 0.57 | 0.50 | 0.35 | 0.26 | 0.35 |
| | Molecular weight (g/mol) | 140,000 | 115,000 | 80,000 | 65,000 | 80,000 |
| | Graft density ($nm^{-2}$) | 0.129 | 0.138 | 0.139 | 0.127 | 0.139 |
| Thermop lastic re- sin com- posi tion | Graft copolymer (parts by weight) | 20 | 20 | 20 | 20 | 22 |
| | Non-graft copolymer (parts by weight) | 80 | 80 | 80 | 80 | 78 |
| | IMP (1/4) | 16 | 16 | 15 | 13 | 18 |
| | MI (g/10min) | 38 | 40 | 45 | 48 | 40 |
| | TS | 488 | 485 | 480 | 472 | 450 |
| | Pencil hardness | B | B | B | B | 2B |

[Table 3]

| | | Comparative Example | | |
|---|---|---|---|---|
| | | 6 | 7 | 8 |
| (S1) step | AMSD charging amount (parts by weight) | 0.10 | - | - |
| (S2) step | TDDM charging amount : AMSD charging amount | 1:3 | 4:3 | 5:3 |
| Graft copolym er | Conversion rate (%) | 96.5 | 96.6 | 96.1 |
| | Graft rate | 0.36 | 0.23 | 0.19 |
| | Molecular weight (g/mol) | 100,000 | 62,000 | 49,000 |
| | Graft density ($nm^{-2}$) | 0.114 | 0.118 | 0.123 |
| Thermop lastic resin composi tion | Graft copolymer (parts by weight) | 20 | 20 | 20 |
| | Non-graft copolymer (parts by weight) | 80 | 80 | 80 |
| | IMP (1/4) | 16 | 14 | 12 |
| | MI (g/10min) | 42 | 47 | 49 |
| | TS | 477 | 481 | 483 |
| | Pencil hardness | B | B | B |

Referring to Table 1 and Table 2 above, in the graft copolymers in Examples 1 to 5 in which the polymerization is initiated in the absence of the molecular weight control agent and the weight of the first molecular weight control agent to be charged is equal to or larger than the weight of the second molecular weight control agent to be charged, the graft density was measured to be 0.1 or less. It could be confirmed that the thermoplastic resin compositions of Examples 1 to 5, which are produced with a graft copolymer having such characteristics, have excellent processability due to the suitable melt index and have excellent impact strength and excellent tensile strength, and excellent scratch resistance is secured since the pencil hardness is measured to be B.

In particular, it could be confirmed that the graft copolymers in Examples 1 to 4 in which the weight of the first molecular weight control agent to be charged is larger than the weight of the second molecular weight control agent to be charged, have improved impact strength as compared with the graft copolymer in Example 5 in which the charged weights of the first molecular weight control agent and the second molecular weight control agent are the same.

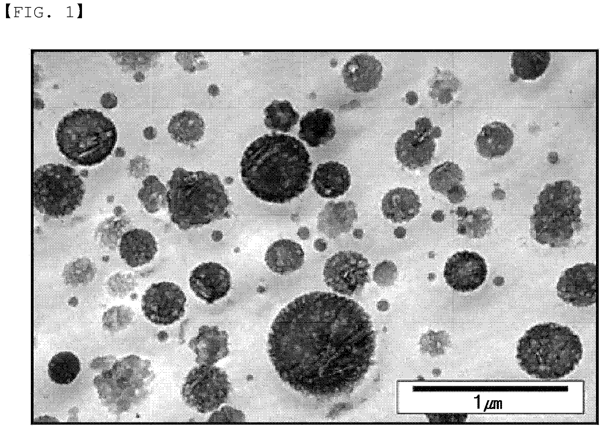

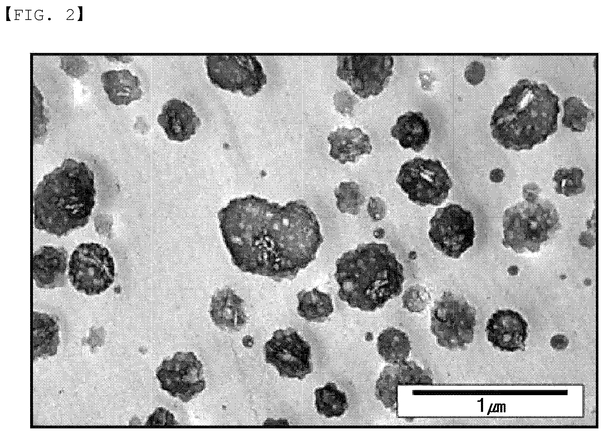

In the case of Comparative Examples 1 to 4 in which the first molecular weight control agent was not charged, it could be confirmed that the impact strength is significantly reduced as compared with Examples 1 to 5. On the other hand, referring to FIG. 1 and FIG 2, it could be confirmed that the graft copolymer (FIG. 1) of Comparative Example 3 in which the graft density exceeds 0.1 and the graft copolymer (FIG. 2) of Example 1 in which the graft density does not exceed 0.1 are distinguished from each other in the TEM image.

In the case of Comparative Example 5 in which the first molecular weight control agent is not charged but the content of the graft copolymer is increased, it could be confirmed that although impact strength is secured as compared with Examples 1 to 5, the tensile strength and the pencil hardness are significantly reduced.

In the case of Comparative Example 6 in which the molecular weight control agent is charged in the polymerization initiation step, it could be confirmed that the pencil hardness is similar, but the impact strength and the melt index decrease as compared with Examples 1 to 5.

In the case of Comparative Examples 7 and 8 in which the weight of the first molecular weight control agent to be charged is smaller than the weight of the second molecular weight control agent to be charged, it could be confirmed that the impact strength is significantly reduced as compared with Examples 1 to 5.

**Claims**

1. A method of producing a graft copolymer, comprising:

   a step (S1) of batch-wise charging a conjugated diene-based polymer, an aromatic vinyl-based monomer, and a vinyl cyanide-based monomer into a reactor to initiate polymerization in an absence of a molecular weight control agent; and
   a step (S2) of simultaneously and continuously charging the aromatic vinyl-based monomer, the vinyl cyanide-based monomer, a first molecular weight control agent, and a second molecular weight control agent different from the first molecular weight control agent into the reactor to carry out polymerization, after initiating the (S1) step,
   wherein a weight of the first molecular weight control agent to be charged is equal to or larger than a weight of the second molecular weight control agent to be charged.

2. The method of producing a graft copolymer according to claim 1,
   wherein a ratio of the weight of the second molecular weight control agent to be charged to the weight of the first molecular weight control agent to be charged is 1:1 to 8.

3. The method of producing a graft copolymer according to claim 1,
   wherein the first molecular weight control agent is one or more selected from the group consisting of an $\alpha$-methyl styrene dimer, a p-methyl styrene dimer, and a 2,4-dimethyl styrene dimer.

4. The method of producing a graft copolymer according to claim 1,
   wherein the second molecular weight control agent is one or more selected from the group consisting of t-dodecyl mercaptan, n-dodecyl mercaptan, n-octyl mercaptan, carbon tetrachloride, methylene chloride, methylene bromide, tetraethyl thiuram disulfide, dipentamethylene thiuram disulfide, and diisopropyl xanthogen disulfide.

5. The method of producing a graft copolymer according to claim 1,
   wherein the step S1 is carried out at a temperature of 40 °C to 55 °C.

6. The method of producing a graft copolymer according to claim 1,

wherein the step S2 is carried out at a temperature of 60 °C or higher and 75 °C or less.

7. The method of producing a graft copolymer according to claim 1,
wherein the first molecular weight control agent and the second molecular weight control agent are charged such that an amount thereof is 0.15 parts by weight to 0.95 parts by weight with respect to 100 parts by weight of a sum of the conjugated diene-based polymer, the aromatic vinyl-based monomer, and the vinyl cyanide-based monomer which are charged in the S1 step, and the aromatic vinyl-based monomer and the vinyl cyanide-based monomer, which are charged in the S2 step.

8. The method of producing a graft copolymer according to claim 7,
wherein the first molecular weight control agent and the second molecular weight control agent are charged such that the amount thereof is 0.3 parts by weight to 0.8 parts by weight with respect to 100 parts by weight of the sum of the conjugated diene-based polymer, the aromatic vinyl-based monomer, and the vinyl cyanide-based monomer which are charged in the S1 step, and the aromatic vinyl-based monomer and the vinyl cyanide-based monomer, which are charged in the S2 step.

9. A graft copolymer comprising:

a conjugated diene-based polymer; and
a plurality of polymer chains grafted onto the conjugated diene-based polymer,
wherein the polymer chain includes an aromatic vinyl-based monomer unit and a vinyl cyanide-based monomer unit, and
the number of the polymer chains is 0.11 or less per 1 $nm^2$ of a surface area of the conjugated diene-based polymer.

10. The graft copolymer according to claim 9,
wherein a graft rate is 0.2 to 0.45.

11. The graft copolymer according to claim 9,
wherein the graft copolymer has a weight average molecular weight of 80,000 g/mol to 140,000 g/mol.

12. A graft copolymer comprising:

a conjugated diene-based polymer; and
a plurality of polymer chains grafted onto the conjugated diene-based polymer,
wherein the polymer chain contains an aromatic vinyl-based monomer unit and a vinyl cyanide-based monomer unit, and
the graft copolymer has a graft density of 0.11 or less, where the graft density is defined by Mathematical Expression 1:

$$[\text{Mathematical Expression 1}]$$

$$\text{graft density } (nm^{-2}) = g_d D \rho_p N_A / 6 M_g$$

where, in Mathematical Expression 1,
$g_d$ is a graft rate calculated according to Mathematical Expression 2,
D is an average particle diameter of the conjugated diene-based polymer,
$\rho_p$ is a particle density of the graft copolymer,
$N_A$ is Avogadro's number, and
$M_g$ is a weight average molecular weight of the plurality of polymer chains grafted, which is obtained by dissolving, in a TFT solution, a dry matter of a sol of the graft copolymer, the sol being separated from a supernatant according to a sol-gel separation method, and then subjecting the dry matter to measurement with GPC, graft rate = a weight (g) of the plurality of polymer chains grafted/a weight (g) of the conjugated diene-based polymer.　　　　[Mathematical Expression 2]

**13.** A thermoplastic resin composition comprising:

the graft copolymer according to any one of Claims 8 to 12: and
a non-graft copolymer containing an aromatic vinyl-based monomer unit and a vinyl cyanide-based monomer unit.

【FIG. 1】

【FIG. 2】

## INTERNATIONAL SEARCH REPORT

| International application No. |
|---|
| **PCT/KR2024/007141** |

| A. | CLASSIFICATION OF SUBJECT MATTER |
|---|---|

**C08F 279/04**(2006.01)i; **C08F 2/38**(2006.01)i; **C08L 25/12**(2006.01)i; **C08L 55/02**(2006.01)i

According to International Patent Classification (IPC) or to both national classification and IPC

| B. | FIELDS SEARCHED |
|---|---|

Minimum documentation searched (classification system followed by classification symbols)

C08F 279/04(2006.01); C08F 2/00(2006.01); C08F 2/22(2006.01); C08F 2/24(2006.01); C08F 212/00(2006.01); C08K 5/14(2006.01); C08L 25/12(2006.01); C08L 55/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 공액디엔(conjugated diene), 그라프트(graft), 공중합체(copolymer), 분자량 조절제(molecular weight regulator), 비닐(vinyl)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0154910 A (LG CHEM, LTD.) 22 November 2022 (2022-11-22)<br>See claims 1-10; and paragraphs [0030]-[0132]. | 1-13 |
| Y | KR 10-2021-0037228 A (LG CHEM, LTD.) 06 April 2021 (2021-04-06)<br>See claims 1 and 5-6; and paragraph [0014]. | 1-13 |
| A | KR 10-0215389 B1 (CHEIL INDUSTRIES INC.) 16 August 1999 (1999-08-16)<br>See claims 1-3. | 1-13 |
| A | KR 10-2002-0035712 A (LG CHEM INVESTMENT, LTD.) 15 May 2002 (2002-05-15)<br>See claim 1. | 1-13 |
| A | KR 10-1992-0008091 A (HAN NAM CHEMICAL CO., LTD.) 27 May 1992 (1992-05-27)<br>See claim 1. | 1-13 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 September 2024** | **02 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
| --- |
| **PCT/KR2024/007141** |

| Patent document<br>cited in search report | | | Publication date<br>(day/month/year) | Patent family member(s) | | | Publication date<br>(day/month/year) |
| --- | --- | --- | --- | --- | --- | --- | --- |
| KR | 10-2022-0154910 | A | 22 November 2022 | None | | | |
| KR | 10-2021-0037228 | A | 06 April 2021 | None | | | |
| KR | 10-0215389 | B1 | 16 August 1999 | KR 10-1998-0029660 | | A | 25 July 1998 |
| KR | 10-2002-0035712 | A | 15 May 2002 | KR | 10-0385728 | B1 | 27 May 2003 |
| KR | 10-1992-0008091 | A | 27 May 1992 | KR 10-1993-0006912 | | B1 | 24 July 1993 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230069530

- JP 4741202 B